# EUROPEAN PATENT APPLICATION

(11) **EP 4 492 106 A1**
(43) Date of publication of application: **15.01.2025**
(21) Application number: 22937294.1
(22) Date of filing: 22.12.2022
(51) Int. Cl.: G02B 6/36

(54) **OPTICAL BACKPLANE AND MANUFACTURING METHOD THEREFOR, OPTICAL BACKPLANE ASSEMBLY, AND COMMUNICATION DEVICE**

(30) Priority: 15.04.2022 CN 202210393837
(71) Applicant: Huawei Technologies Co., Ltd., Shenzhen, Guangdong 518129 (CN)
(72) Inventor: FAN, Huizhong, Shenzhen, Guangdong 518129 (CN)
(74) Representative: Isarpatent
(86) International application number: PCT/CN2022/140945
(87) International publication number: WO 2023/197667

(57) **Abstract**

An optical backplane and a manufacturing method thereof, an optical backplane component, and a communication device are provided. The optical backplane (60) includes a substrate (61) and a first optical fiber (62). The first optical fiber (62) includes a connection section (621) and a bent tail section (622). The connection section (621) is disposed on one side of the substrate (61) in a thickness direction (X) of the substrate (61), and the substrate (61) is connected to the connection section (621). The bent tail section (622) is folded relative to the connection section (621) in the thickness direction (X), and an end part of at least one bent tail section (622) is disposed on one side of the substrate (61) in the thickness direction (X). This can resolve a problem that an optical backplane (60) occupies large space in a conventional technology.

## Description

This application claims priority to Chinese Patent Application No. 202210393837.1, filed with the China National Intellectual Property Administration on April 15, 2022 and entitled "OPTICAL BACKPLANE AND MANUFACTURING METHOD THEREOF, optical backplane COMPONENT, AND COMMUNICATION DEVICE", which is incorporated herein by reference in its entirety.

### TECHNICAL FIELD

Embodiments of this application relate to the field of communication technologies, and in particular, to an optical backplane and a manufacturing method thereof, an optical backplane component, and a communication device.

### BACKGROUND

An optical communication technology becomes a low-cost and mass-produced technology, and is widely used in applications such as switch interconnection and a server interface. An optical backplane is an important part of a network switching device, and a main function is to implement signal interconnection between a line processing unit and a switch fabric unit.

Currently, an optical fiber distribution manner of the optical backplane is using an optical fiber distribution component (for example, an optical fiber distribution wheel) to distribute an optical fiber on a large surface of a substrate. The large surface of the substrate means a surface of the substrate in a thickness direction. Two ends of the optical fiber respectively extend from edges of the substrate. Parts of the optical fiber that extend from the edges of the substrate form pigtails. For example, the optical fiber may extend from the edges of the substrate in a length direction or a width direction of the substrate. Each of the two ends of the optical fiber is connected to an optical connector. The optical connector on the optical fiber is configured to be in inserted connection to an optical connector on a service board, to form an optical path.

However, when the optical connector on the service board is located at a position corresponding to the large surface of the substrate, based on different positions of optical connectors, the pigtails of the optical fiber need to be adjusted in a length through coiling, and the pigtails need to be coiled between the optical backplane and the service board, so that the optical connectors on the pigtails can be in inserted connection to the optical connector on the service board. Therefore, the pigtail needs to be coiled or wound, resulting in large space occupied by the optical backplane.

### SUMMARY

Embodiments of this application provide an optical backplane and a manufacturing method thereof, an optical backplane component, and a communication device, to resolve a problem that an optical backplane occupies large space in a conventional technology.

A first aspect of this application provides an optical backplane, including a substrate and a first optical fiber.

The first optical fiber includes a connection section and a bent tail section. In a thickness direction of the substrate, the connection section is disposed on one side of the substrate. The substrate is connected to the connection section. The bent tail section is folded relative to the connection section in the thickness direction. An end part of at least one bent tail section is disposed on one side of the substrate in the thickness direction.

In the optical backplane in this embodiment of this application, the first optical fiber includes the connection section and the bent tail section. The end part of the bent tail section is disposed on one side of the substrate, so that the bent tail section is disposed corresponding to a surface of the substrate in the thickness direction, and the optical fiber extends from the surface of the substrate. A structure of the optical backplane may be designed based on a position of an optical connector on a service board, so that the bent tail section of the first optical fiber is disposed corresponding to the position of the optical connector on the service board, and the bent tail section and the corresponding optical connector on the service board may be mutually inserted by using the optical connector, to implement connection. Therefore, when the optical connector on the service board is located at a position corresponding to the surface of the substrate in the thickness direction X of the substrate, in the optical backplane in this embodiment of this application, the bent tail section may be in inserted connection to the optical connector on the service board by using the optical connector, to form an optical path. In this case, the bent tail section does not need to adjust a position of the optical connector in a fiber winding manner or adjust a length of the bent tail section in a fiber coiling manner. This effectively reduces space occupation of the optical backplane, helps reduce a spacing between the optical backplane component and the service board, and may also reduce a thickness of the optical backplane, so that structures of the optical backplane component and the service board are more compact, to reduce an overall size of a communication device. The optical fiber extends from the surface of the optical backplane, so that he optical backplane can implement front and rear insertion. More optical fibers may be distributed on the substrate of the optical backplane, to help improve optical fiber distribution density on the optical backplane.

In a possible implementation, there are a plurality of first optical fibers, and bent tail sections of all the first optical fibers are disposed on one side of the substrate, so that the optical fibers extend from one surface of the substrate.

In a possible implementation, there are a plurality of first optical fibers, bent tail sections of some of the first optical fibers are disposed on one side of the substrate, and bent tail sections of the others of the first optical fibers are disposed on the other side of the substrate. In this way, the optical fibers extend from two surfaces of the substrate, and the optical backplane can implement front and rear insertion.

In a possible implementation, the substrate includes an opening. The opening is through the substrate in the thickness direction. The bent tail section of at least one of the first optical fibers penetrates through the opening.

An end part of the bent tail section that passes through the opening is connected to a corresponding optical connector. A position of the optical connector corresponds to a position of the opening, and the position of the optical connector corresponds to a position of an optical connector on a service board. In this case, the optical connector can be directly connected to the optical connector on the service board, the bent tail section, the optical connector, and the optical connector on the service board form a relatively short optical link, reducing a possibility of optical signal attenuation.

In a possible implementation, the at least one of the first optical fibers includes the two bent tail sections, and the two bent tail sections respectively penetrate through the two openings; or one bent tail section penetrates through the opening, and the other bent tail section and the connection section are located on a same side of the substrate.

In a possible implementation, the bent tail section and the connection section of at least one of the first optical fibers are located on a same side of the substrate.

In a possible implementation, the at least one of the first optical fibers includes the two bent tail sections, and the two bent tail sections and the connection section are all located on a same side of the substrate.In a possible implementation, the connection section is bonded to the substrate. Therefore, no connecting member needs to be separately disposed between the connection section and the substrate, so that difficulty in a connection process between the connection section and the substrate is low. In addition, after the connection section is bonded to the substrate, position stability of the connection section is good, and deviation is not likely to occur between the connection section and the substrate.

In a possible implementation, the substrate is a flexible structure, so that the substrate can be appropriately bent to change a shape, and has good thermal expansion and cold contraction performance, reducing a possibility that the first optical fiber is broken because the substrate generates excessively large stress on the first optical fiber due to thermal expansion and cold contraction.

In a possible implementation, the optical backplane further includes a second optical fiber, the second optical fiber is connected to the substrate, the second optical fiber is connected to a surface of the substrate in the thickness direction, and two ends of the second optical fiber respectively extend from two different positions at an edge of the substrate in a direction perpendicular to the thickness direction. A first optical fiber and the second optical fiber respectively allow the optical fibers to extend from a surface and the edge of the substrate, improving connection flexibility of the optical backplane.

In a possible implementation, the second optical fiber is disposed on each of two opposite surfaces of the substrate in the thickness direction. This helps improve optical fiber distribution density on the substrate.

A second aspect of embodiments of this application provides an optical backplane component, including a housing, an optical backplane, and a first optical connector.

At least a part of the optical backplane is disposed in the housing. The backplane includes a substrate and a first optical fiber. The first optical fiber includes a connection section and a bent tail section. In a thickness direction of the substrate, the connection section is disposed on one side of the substrate. The substrate is connected to the connection section. The bent tail section is folded relative to the connection section in the thickness direction. An end part of at least one bent tail section is disposed on one side of the substrate in the thickness direction. The first optical connector is disposed in the housing. The first optical connector is located on one side of the substrate in the thickness direction. An end part of the bent tail section is connected to the first optical connector.

In a possible implementation, there are a plurality of first optical fibers, and bent tail sections of all the first optical fibers are disposed on one side of the substrate, so that the optical fibers extend from one surface of the substrate.

In a possible implementation, there are a plurality of first optical fibers, bent tail sections of some of the first optical fibers are disposed on one side of the substrate, and bent tail sections of the others of the first optical fibers are disposed on the other side of the substrate. In this way, the optical fibers extend from two surfaces of the substrate, and the optical backplane can implement front and rear insertion.

In a possible implementation, the substrate includes an opening. The opening is through the substrate in the thickness direction. The at least one bent tail section of the first optical fiber penetrates through the opening. The first optical connector is disposed corresponding to the opening.

In a possible implementation, the at least one of the first optical fibers includes the two bent tail sections, and the two bent tail sections respectively penetrate through the two openings; or one bent tail section penetrates through the opening, and the other bent tail section and the connection section are located on a same side of the substrate.

In a possible implementation, the bent tail section and the connection section of at least one of the first optical fibers are located on a same side of the substrate.

In a possible implementation, the at least one of the first optical fibers includes the two bent tail sections, and the two bent tail sections and the connection section are all located on a same side of the substrate.

In a possible implementation, the connection section is bonded to the substrate. Therefore, no connecting member needs to be separately disposed between the connection section and the substrate, so that difficulty in a connection process between the connection section and the substrate is low. In addition, after the connection section is bonded to the substrate, position stability of the connection section is good, and deviation is not likely to occur between the connection section and the substrate.

In a possible implementation, the substrate is a flexible structure, so that the substrate can be appropriately bent to change a shape, and has good thermal expansion and cold contraction performance, reducing a possibility that the first optical fiber is broken because the substrate generates excessively large stress on the first optical fiber due to thermal expansion and cold contraction.

In a possible implementation, the optical backplane further includes a second optical fiber, the second optical fiber is connected to the substrate, the second optical fiber is connected to a surface of the substrate in the thickness direction, and two ends of the second optical fiber respectively extend from two different positions at an edge of the substrate in a direction perpendicular to the thickness direction. The optical backplane component further includes a second optical connector, where an end part of the second optical fiber is connected to the second optical connector; and the second optical connector is disposed in the housing, or the second optical connector is located outside the housing.

A third aspect of embodiments of this application provides a communication device, including a service board and an optical backplane component. The optical backplane component includes a housing, an optical backplane, and a first optical connector.

At least a part of the optical backplane is disposed in the housing. The backplane includes a substrate and a first optical fiber. The first optical fiber includes a connection section and a bent tail section. In a thickness direction of the substrate, the connection section is disposed on one side of the substrate. The substrate is connected to the connection section. The bent tail section is folded relative to the connection section in the thickness direction. An end part of at least one bent tail section is disposed on one side of the substrate in the thickness direction. The first optical connector is disposed in the housing. The first optical connector is located on one side of the substrate in the thickness direction. An end part of the bent tail section is connected to the first optical connector.

The first optical connector on the optical backplane component is inserted into the service board.

In a possible implementation, there are a plurality of first optical fibers, and bent tail sections of all the first optical fibers are disposed on one side of the substrate, so that the optical fibers extend from one surface of the substrate.

In a possible implementation, there are a plurality of first optical fibers, bent tail sections of some of the first optical fibers are disposed on one side of the substrate, and bent tail sections of the others of the first optical fibers are disposed on the other side of the substrate. In this way, the optical fibers extend from two surfaces of the substrate, and the optical backplane can implement front and rear insertion.

In a possible implementation, the substrate includes an opening. The opening is through the substrate in the thickness direction. The at least one bent tail section of the first optical fiber penetrates through the opening. The first optical connector is disposed corresponding to the opening.

In a possible implementation, the at least one of the first optical fibers includes the two bent tail sections, and the two bent tail sections respectively penetrate through the two openings; or one bent tail section penetrates through the opening, and the other bent tail section and the connection section are located on a same side of the substrate.

In a possible implementation, the bent tail section and the connection section of at least one of the first optical fibers are located on a same side of the substrate.

In a possible implementation, the at least one of the first optical fibers includes the two bent tail sections, and the two bent tail sections and the connection section are all located on a same side of the substrate.

In a possible implementation, the connection section is bonded to the substrate. Therefore, no connecting member needs to be separately disposed between the connection section and the substrate, so that difficulty in a connection process between the connection section and the substrate is low. In addition, after the connection section is bonded to the substrate, position stability of the connection section is good, and deviation is not likely to occur between the connection section and the substrate.

In a possible implementation, the substrate is a flexible structure, so that the substrate can be appropriately bent to change a shape, and has good thermal expansion and cold contraction performance, reducing a possibility that the first optical fiber is broken because the substrate generates excessively large stress on the first optical fiber due to thermal expansion and cold contraction.

In a possible implementation, the optical backplane further includes a second optical fiber, the second optical fiber is connected to the substrate, the second optical fiber is connected to a surface of the substrate in the thickness direction, and two ends of the second optical fiber respectively extend from two different positions at an edge of the substrate in a direction perpendicular to the thickness direction. The optical backplane component further includes a second optical connector, where an end part of the second optical fiber is connected to the second optical connector; and the second optical connector is disposed in the housing, or the second optical connector is located outside the housing.

A fourth aspect of embodiments of this application provides a manufacturing method of an optical backplane, including:
providing a substrate;
providing a first optical fiber, distributing the first optical fiber on the substrate, and folding at least one tail end of the first optical fiber in a thickness direction of the substrate, to form a bent tail section, where an end part of the bent tail section is disposed on one side of the substrate in the thickness direction, and a part that is of the first optical fiber and that is connected to the substrate forms a connection section; and
fastening the connection section to the substrate.

In a possible implementation, after the step of providing a substrate, an opening is processed in the substrate, the opening is through the substrate in the thickness direction, and at least one bent tail section of the first optical fiber penetrates through the opening.

In a possible implementation, after the step of fastening the connection section to the substrate, a second optical fiber is provided, the second optical fiber is distributed on the substrate, and two ends of the second optical fiber respectively extend from two different positions at an edge of the substrate in a direction perpendicular to the thickness direction.

### BRIEF DESCRIPTION OF DRAWINGS

FIG. 1 is a diagram of a scenario according to an embodiment of this application;
FIG. 2 is a diagram of a partial structure of a communication device according to an embodiment of this application;
FIG. 3 is a diagram of a partial sectional structure of an optical backplane component according to an embodiment of this application;
FIG. 4 is a diagram of a partial structure of an optical backplane component according to an embodiment of this application;
FIG. 5 is a diagram of a partial sectional structure of an optical backplane according to an embodiment of this application;
FIG. 6 is a diagram of a partial structure of an optical backplane component according to another embodiment of this application;
FIG. 7 is a diagram of a partial structure of an optical backplane component according to still another embodiment of this application;
FIG. 8 is a diagram of a partial structure of an optical backplane component according to still another embodiment of this application;
FIG. 9 is a diagram of a partial structure of an optical backplane component according to still another embodiment of this application;
FIG. 10 is a diagram of a partial structure of an optical backplane component according to still another embodiment of this application;
FIG. 11 is a diagram of a partial sectional structure of an optical backplane according to another embodiment of this application;
FIG. 12 is a diagram of a partial structure of an optical backplane component according to still another embodiment of this application;
FIG. 13 is a diagram of a partial structure of an optical backplane component according to still another embodiment of this application;
FIG. 14 is a diagram of a partial sectional structure of an optical backplane according to still another embodiment of this application;
FIG. 15 is a diagram of a partial sectional structure of an optical backplane according to still another embodiment of this application;
FIG. 16 is a diagram of a partial structure of a communication device according to another embodiment of this application;
FIG. 17 is a diagram of a partial sectional structure of an optical backplane component according to still another embodiment of this application;
FIG. 18 is a diagram of a partial structure of an optical backplane component according to yet another embodiment of this application; and
FIG. 19 is a schematic flowchart of a manufacturing method of an optical backplane according to an embodiment of this application.

### Reference numerals:

10: communication device;
20: body;
30: service board;
40: optical backplane component;
50: housing;
60: optical backplane;
61: substrate; 61a: opening;
62: first optical fiber; 621: connection section; 622: bent tail section;
63: second optical fiber;
70: first optical connector;
80: second optical connector;
X: thickness direction.

### DESCRIPTION OF EMBODIMENTS

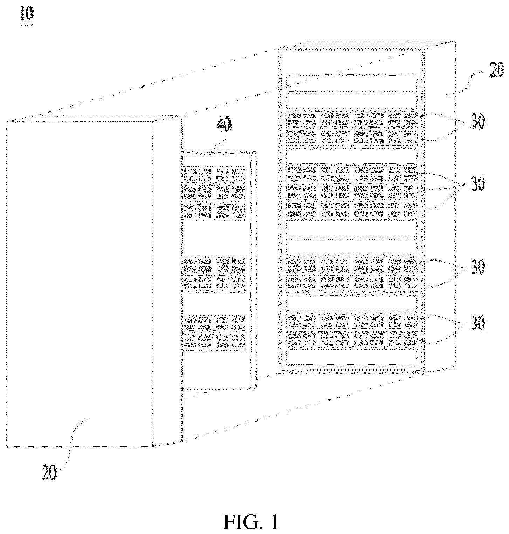

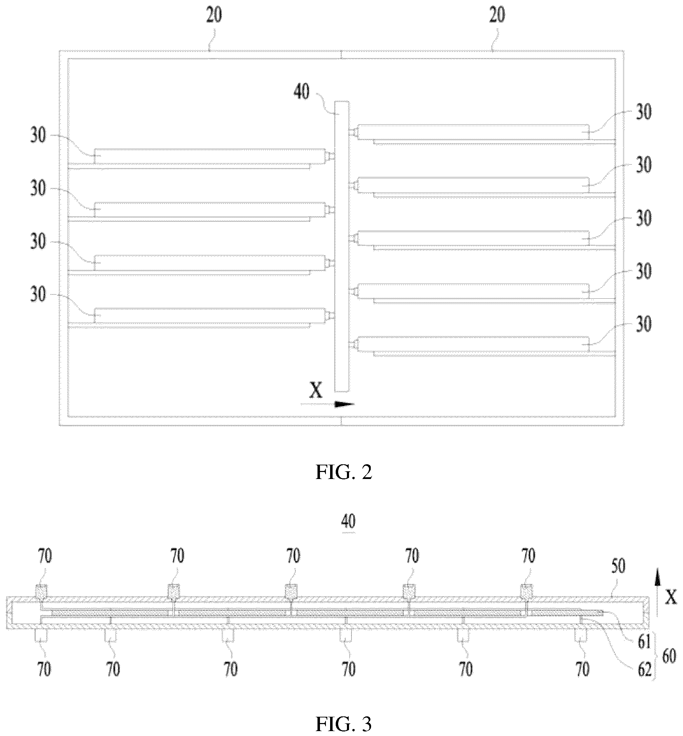

FIG. 1 schematically shows a scenario to which an embodiment of this application is applicable. FIG. 2 schematically shows a partial structure of a communication device 10 according to an embodiment of this application. Refer to FIG. 1 and FIG. 2. An embodiment of this application provides the communication device 10. The communication device 10 may be a switch, a router, a network transmission device, or a broadband access device. The communication device 10 may include a body 20, a service board 30, and an optical backplane component 40. For example, a plurality of accommodation slots may be provided on the body 20. The service board 30 may be inserted into the accommodation slot. Each accommodation slot can accommodate one service board 30.

In some possible implementations, two groups of service boards 30 may be disposed in the body 20. Each group of service boards 30 includes a plurality of service boards 30 disposed side by side. In some possible implementations, a service board 30 in one group of service boards 30 and a service board 30 in another group of service boards 30 may be disposed orthogonally, that is, a thickness direction of the service board 30 in one group of service boards 30 is perpendicular to a thickness direction of the service board 30 in the another group of service boards 30. The optical backplane component 40 is disposed between two groups of service boards 30. The service boards 30 on two sides of the optical backplane component 40 may be separately connected to the optical backplane component 40, so that each service board 30 may form an optical path by using the optical backplane component 40. This implements optical signal transmission between the service boards 30.

It may be understood that one group of service boards 30 may alternatively be disposed in the body 20. The optical backplane component 40 may be disposed on one side of one group of service boards 30. Service boards 30 at different layers in one group of service boards 30 may form optical paths by using the optical backplane component 40, to implement optical signal transmission between the service boards 30 at the different layers.

FIG. 3 schematically shows a partial sectional structure of an optical backplane component 40 according to an embodiment of this application. Refer to FIG. 3. The optical backplane component 40 in this embodiment of this application may include a housing 50, an optical backplane 60, and a first optical connector 70.

At least a part of the optical backplane 60 is disposed in the housing 50. The housing 50 may provide support for the optical backplane 60, and may provide protection for the optical backplane 60. In some possible implementations, the housing 50 may include a first casing and a second casing that are detachably connected. The first casing and the second casing may cover or be split from each other.

The optical backplane 60 includes a substrate 61 and a first optical fiber 62. The substrate 61 is disposed in the housing 50. The first optical fiber 62 is connected to the substrate 61. The substrate 61 provides support for the first optical fiber 62. One end of the first optical fiber 62 may be connected to the first optical connector 70. The first optical connector 70 is located on one side of the substrate 61 in a thickness direction X of the substrate 61, that is, an orthographic projection of the first optical connector 70 falls within an orthographic projection of the substrate 61 in the thickness direction X of the substrate 61. It should be noted that, that the orthographic projection of the first optical connector 70 falls within the orthographic projection of the substrate 61 means that the orthographic projection of the first optical connector 70 falls within an outermost contour of the orthographic projection of the substrate 61. In some possible implementations, the first optical connector 70 may be disposed in the housing 50.

When the optical backplane component 40 is assembled with a service board 30, the optical backplane component 40 and the service board 30 are disposed side by side in the thickness direction X of the substrate 61. The first optical connector 70 may be disposed facing the service board 30. The first optical connector 70 on the optical backplane component 40 is disposed corresponding to an optical connector on the service board 30, so that the first optical connector 70 on the optical backplane component 40 and the optical connector on the service board 30 can be directly mutually inserted, to implement connection and form an optical path. The optical backplane component 40 and the service board 30 are directly interconnected by using the optical connectors, to form the optical path to implement optical signal transmission. This can effectively shorten an optical link and help reduce a loss of an optical signal caused by optical path coupling or an insertion loss.

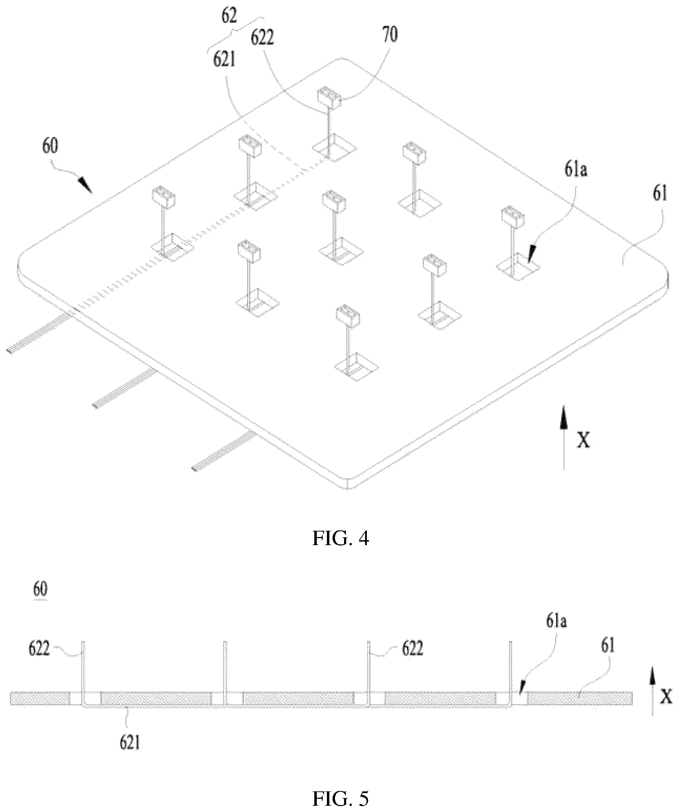

FIG. 4 schematically shows a partial structure of an optical backplane component 40 according to an embodiment of this application. Refer to FIG. 4. A first optical fiber 62 in this embodiment of this application includes a connection section 621 and a bent tail section 622. The connection section 621 is disposed on one side of the substrate 61 in a thickness direction X of a substrate 61. A surface that is of the substrate 61 and that faces the connection section 621 is connected to the connection section 621. The bent tail section 622 is folded relative to the connection section 621 in the thickness direction X, so that there is a predetermined angle between the bent tail section 622 and the connection section 621. The folded bent tail section 622 may change redirection of an optical signal, to directly implement optical signal redirection by using the first optical fiber 62 without adding another redirection component, for example, a grating or a prism. This helps reduce a possibility of optical signal attenuation caused by optical path coupling or an insertion loss due to a need for adding the redirection component. For example, a propagation direction of the optical signal in the connection section 621 may be perpendicular to the thickness direction X, and after the optical signal is redirected by the bent tail section 622, an emission direction of the optical signal in the bent tail section 622 may be parallel to the thickness direction X.

An end part of at least one bent tail section 622 on the first optical fiber 62 is disposed on one side of the substrate 61 in the thickness direction X of the substrate 61, that is, an orthographic projection of the end part of the at least one bent tail section 622 falls within an orthographic projection of the substrate 61 in the thickness direction X. It should be noted that, that the orthographic projection of the end part of the bent tail section 622 falls within the orthographic projection of the substrate 61 means that the orthographic projection of the end part of the bent tail section 622 falls within an outermost contour of the orthographic projection of the substrate 61. There is a spacing between the end part of the bent tail section 622 and a surface of the substrate 61 in the thickness direction X. The end part of the bent tail section 622 may be connected to the first optical connector 70.

In the optical backplane 60 in this embodiment of this application, the first optical fiber 62 includes the connection section 621 and the bent tail section 622. The end part of the bent tail section 622 is disposed on one side of the substrate 61, so that the bent tail section 622 is disposed corresponding to the surface of the substrate 61 in the thickness direction X, and the optical fibers extend from the surface of the substrate 61. A structure of the optical backplane 60 may be designed based on a position of an optical connector on a service board 30, so that the bent tail section 622 of the first optical fiber 62 is disposed corresponding to the position of the optical connector on the service board 30, and the bent tail section 622 and the corresponding optical connector on the service board 30 may be mutually inserted by using the first optical connector 70, to implement connection. Therefore, when the optical connector on the service board 30 is located at a position corresponding to the surface of the substrate 61 in the thickness direction X of the substrate 61, in the optical backplane 60 in this embodiment of this application, the bent tail section 622 may be in inserted connection to the optical connector on the service board 30 by using the first optical connector 70, to form an optical path. In this case, the bent tail section 622 does not need to adjust a position of the first optical connector 70 in a fiber winding manner or adjust a length of the bent tail section 622 in a fiber coiling manner. This effectively reduces space occupation of the optical backplane 60, helps reduce a spacing between the optical backplane component 40 and the service board 30, and may also reduce a thickness of the optical backplane 60, so that structures of the optical backplane component 40 and the service board 30 are more compact, to reduce an overall size of a communication device 10. The optical fibers extend from the surface of the optical backplane 60, so that he optical backplane 60 can support front and rear insertion. More optical fibers may be distributed on the substrate 61 of the optical backplane 60, to help improve optical fiber distribution density on the optical backplane 60.

In some possible implementations, refer to FIG. 4. The bent tail section 622 of the first optical fiber 62 is disposed on one side of the substrate 61 in the thickness direction X, so that the optical fiber extends from one surface of the substrate 61. When the optical backplane 60 needs to be connected to one group of service boards 30, the bent tail section 622 on one side of the substrate 61 is connected to an optical connector at a corresponding position on the service boards 30.

In some examples, the first optical fiber 62 may include one bent tail section 622, and the other end part of the first optical fiber 62 extends from an edge of the substrate 61 and is not folded relative to the connection section 621.

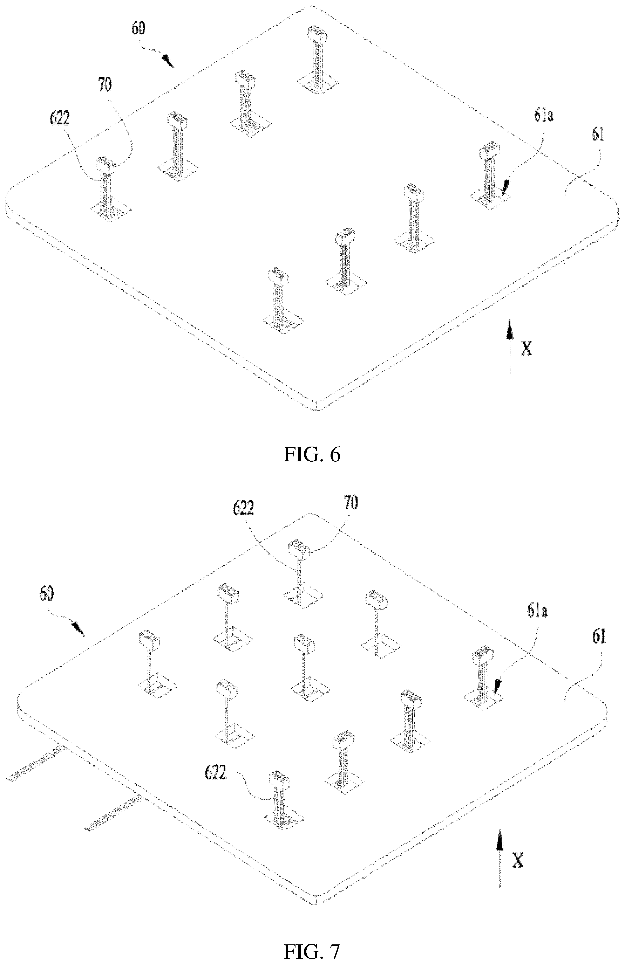

In some examples, FIG. 5 schematically shows a partial sectional structure of an optical backplane 60 according to an embodiment of this application. FIG. 6 schematically shows a partial structure of an optical backplane component 40 according to an embodiment of this application. Refer to FIG. 5 and FIG. 6. The first optical fiber 62 may include two bent tail sections 622. Two ends of the first optical fiber 62 are both folded relative to the connection section 621, to form the bent tail sections 622. The two bent tail sections 622 are located on a same side of the connection section 621.

In some examples, FIG. 7 schematically shows a partial structure of an optical backplane component 40 according to an embodiment of this application. Refer to FIG. 7. There are a plurality of first optical fibers 62. Some of the first optical fibers 62 include one bent tail section 622, and the others of the first optical fibers 62 include two bent tail sections 622.

In some examples, a substrate 61 may include an opening 61a. The opening 61a penetrates through two surfaces of a substrate 61 in a thickness direction X. At least one bent tail section 622 of the first optical fiber 62 penetrates through the opening 61a. A connection section 621 of the first optical fiber 62 is located outside the opening 61a. An end part of the bent tail section 622 that penetrates through the opening 61a and the connection section 621 are respectively located on two opposite sides of the substrate 61. In a process of distributing the first optical fiber 62 on the substrate 61, an optical fiber distribution apparatus may connect the connection section 621 to the substrate 61. The end part of the bent tail section 622 that penetrates through the opening 61a is connected to a corresponding first optical connector 70. A position of the first optical connector 70 corresponds to a position of the opening 61a, and the position of the first optical connector 70 corresponds to a position of an optical connector on a service board 30. In this case, the first optical connector 70 can be directly connected to the optical connector on the service board 30, the bent tail section 622, the first optical connector 70, and the optical connector on the service board 30 form a relatively short optical link, reducing a possibility of optical signal attenuation.

For example, there are a plurality of first optical fibers 62. More than two bent tail sections 622 may penetrate through a same opening 61a. A plurality of bent tail sections 622 that penetrate through the same opening 61a may be connected to a same first optical connector 70.

For example, a shape of the opening 61a may be, but is not limited to, a rectangle, a circle, or an ellipse. This is not specifically limited in this application.

For example, there are a plurality of openings 61a. The plurality of openings 61a may be distributed in a linear manner, or may be distributed randomly, improving flexibility of an optical fiber extension position of the optical backplane 60. A position of the opening 61a may be designed based on a position of an optical connector on the service board 30, to ensure that a position of the bent tail section 622 that penetrates through the opening 61a may correspond to positions of the first optical connector 70 and the optical connector on the service board 30. A quantity of first optical connectors 70 disposed on one side of the substrate 61 is the same as a quantity of openings 61a. A position of the first optical connector 70 disposed on one side of the substrate 61 corresponds to a position of the opening 61a in the thickness direction X of the substrate 61.

For example, the first optical connector 70 may include an MT (Mechanical Transfer) optical fiber connector or a multi-core multi-channel plug-in MPO (Multi-fiber Push On) optical fiber connector.

For example, refer to FIG. 4. The first optical fiber 62 includes one bent tail section 622. The bent tail section 622 of the first optical fiber 62 penetrates through the opening 61a. Alternatively, refer to FIG. 6. The first optical fiber 62 includes two bent tail sections 622. The two bent tail sections 622 are located on a same side of the connection section 621. The two bent tail sections 622 may respectively penetrate through two different openings 61a. Alternatively, refer to FIG. 7. In an embodiment in which there are a plurality of first optical fibers 62, some of the first optical fibers 62 include one bent tail section 622, and the others of the first optical fibers 62 include two bent tail sections 622.

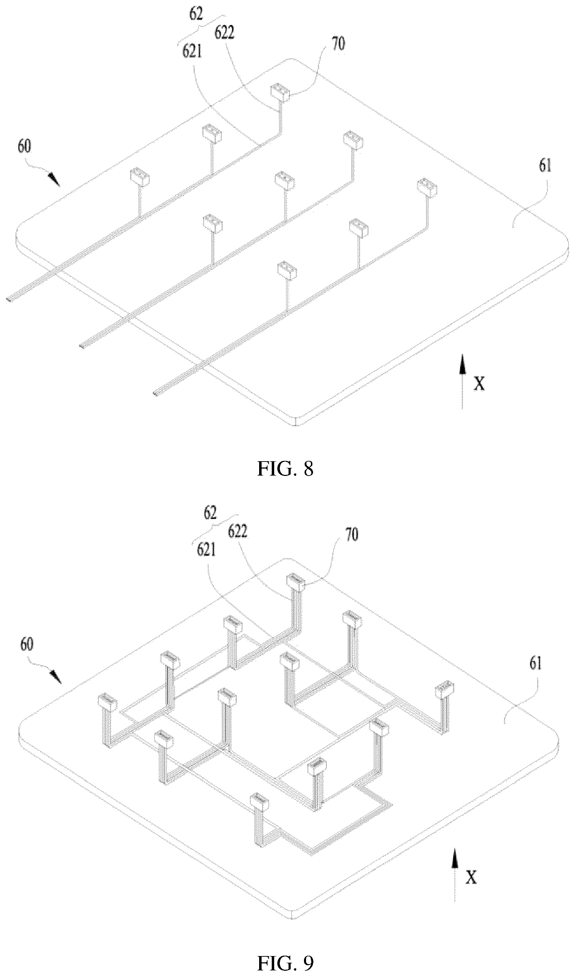

In some examples, FIG. 8 schematically shows a partial structure of an optical backplane component 40 according to an embodiment of this application. Refer to FIG. 8. A substrate 61 may be of an integral structure, that is, no opening 61a is provided in the substrate 61. A bent tail section 622 is disposed on one side of the substrate 61. For example, a first optical fiber 62 includes one bent tail section 622. The bent tail section 622 and a connection section 621 are both located on a same side of the substrate 61. For example, FIG. 9 schematically shows a partial structure of an optical backplane component 40 according to an embodiment of this application. Refer to FIG. 9. A first optical fiber 62 includes two bent tail sections 622. The two bent tail sections 622 and a connection section 621 are all located on a same side of a substrate 61. For example, in an embodiment in which there are a plurality of first optical fibers 62, some of the first optical fibers 62 include one bent tail section 622, and the others of the first optical fibers 62 include two bent tail sections 622.

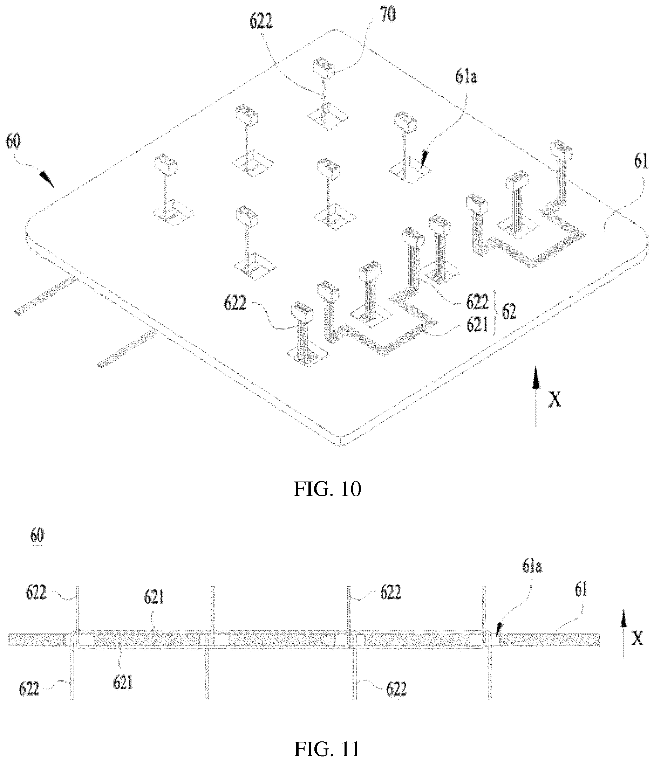

In some examples, FIG. 10 schematically shows a partial structure of an optical backplane component 40 according to an embodiment of this application. Refer to FIG. 10. A substrate 61 may include an opening 61a. There are a plurality of first optical fibers 62. Bent tail sections 622 and connection sections 621 of some of the first optical fibers 62 are located on a same side of the substrate 61, and bent tail sections 622 of the others of the first optical fibers 62 penetrate through openings 61a. The bent tail sections 622 of all the first optical fibers 62 are located on one side of the substrate 61.

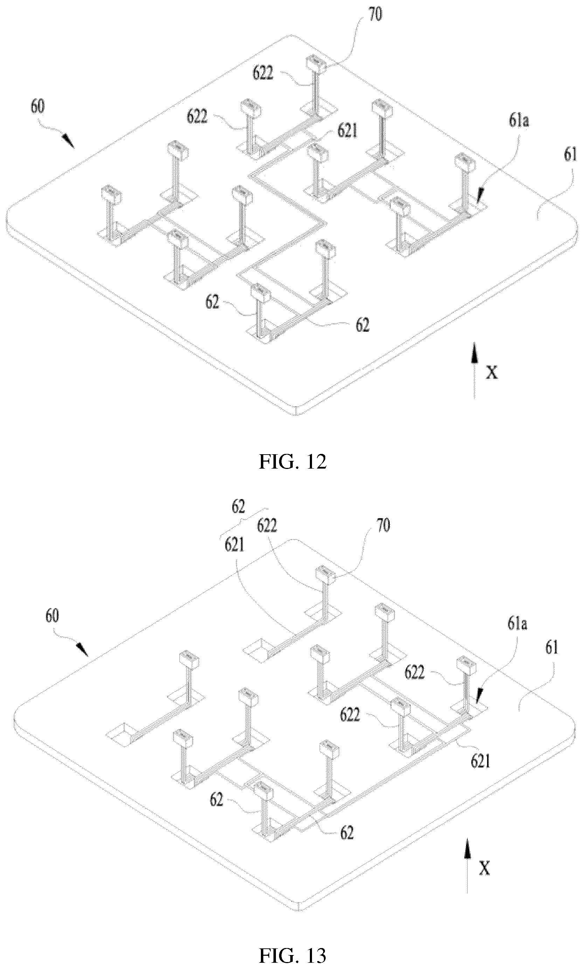

In some possible implementations, FIG. 11 schematically shows a partial sectional structure of an optical backplane 60 according to an embodiment of this application. FIG. 12 schematically shows a partial structure of an optical backplane component 40 according to an embodiment of this application. Refer to FIG. 11 and FIG. 12. Bent tail sections 622 of first optical fibers 62 are disposed on each of two sides of a substrate 61 in a thickness direction X, so that the optical fiber extends from two surfaces of the substrate 61, and the optical backplane 60 can implement front and rear insertion. Correspondingly, first optical connectors 70 are separately disposed on two sides of the substrate 61. When the optical backplane 60 needs to be connected to two groups of service boards 30, the optical backplane 60 is located between the two groups of service boards 30. Optical connectors on one group of service boards 30 are connected to bent tail sections 622 on one side of the substrate 61, and optical connectors on the other group of service boards 30 are connected to bent tail sections 622 on the other side of the substrate 61.

In some examples, there are a plurality of first optical fibers 62. Connection sections 621 of some of the first optical fibers 62 are disposed on one side of the substrate 61, and connection sections 621 of the others of the first optical fibers 62 are disposed on the other side of the substrate 61.

In some examples, a substrate 61 may include an opening 61a. The opening 61a penetrates through two surfaces of a substrate 61 in a thickness direction X. For example, the first optical fiber 62 includes one bent tail section 622. Alternatively, the first optical fiber 62 includes two bent tail sections 622. Alternatively, in an embodiment in which there are a plurality of first optical fibers 62, some of the first optical fibers 62 include one bent tail section 622, and the others of the first optical fibers 62 include two bent tail sections 622.

In some examples, refer to FIG. 12. There are a plurality of first optical fibers 62. Bent tail sections 622 of some of the first optical fibers 62 penetrate through the opening 61a from a first side of the substrate 61, so that the connection section 621 is located on the first side of the substrate 61, and end parts of the bent tail sections 622 are located on a second side of the substrate 61. Bent tail sections 622 of the others of the first optical fibers 62 penetrate through the opening 61a from a second side of the substrate 61, so that the connection section 621 is located on the second side of the substrate 61, and end parts of the bent tail sections 622 are located on the first side of the substrate 61. The first side and the second side of the substrate 61 are opposite in the thickness direction X.

In some examples, FIG. 13 schematically shows a partial structure of an optical backplane component 40 according to an embodiment of this application. Refer to FIG. 13. A first optical fiber 62 includes two bent tail sections 622. For two bent tail sections 622 of some of first optical fibers 62, one bent tail section 622 penetrates passes through an opening 61a, and the other bent tail section 622 and a connection section 621 are located on a same side of a substrate 61, so that end parts of the two bent tail sections 622 are respectively located on two opposite sides of the substrate 61.

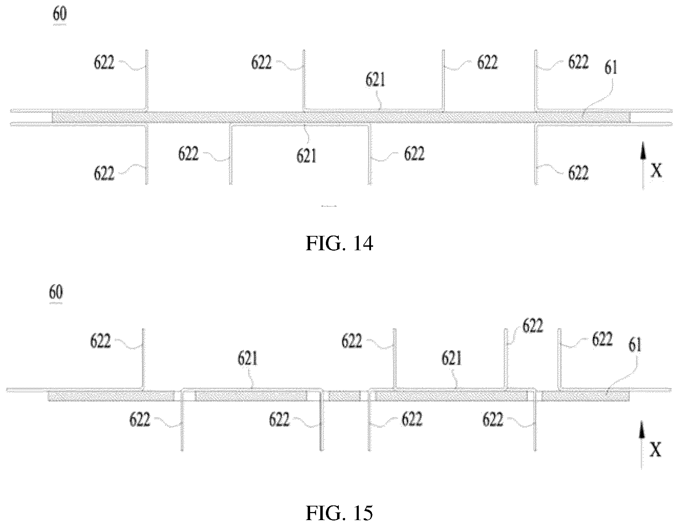

In some examples, FIG. 14 schematically shows a partial sectional structure of an optical backplane 60 according to an embodiment of this application. Refer to FIG. 14. A substrate 61 may be of an integral structure, that is, no opening 61a is provided in the substrate 61. Bent tail sections 622 are disposed on each of two sides of the substrate 61. For example, in an embodiment in which there are a plurality of first optical fibers 62, some of the first optical fibers 62 include one bent tail section 622, and the others of the first optical fibers 62 include two bent tail sections 622.

For example, the first optical fiber 62 includes one bent tail section 622. The bent tail section 622 and a connection section 621 are both located on a same side of the substrate 61.

For example, the first optical fiber 62 includes two bent tail sections 622. The two bent tail sections 622 and a connection section 621 are all located on a same side of a substrate 61.

In some examples, FIG. 15 schematically shows a partial sectional structure of an optical backplane 60 according to an embodiment of this application. Refer to FIG. 15. A substrate 61 may include an opening 61a. There are a plurality of first optical fibers 62. Bent tail sections 622 and connection sections 621 of some of the first optical fibers 62 are located on a same side of the substrate 61, and bent tail sections 622 of the others of the first optical fibers 62 penetrate through openings 61a. An end part of a bent tail section 622 that penetrates through the opening 61a and an end part of a bent tail section 622 that does not penetrate through the opening 61a are respectively located on two sides of the substrate 61.

In some possible implementations, a connection section 621 of the first optical fiber 62 is bonded to the substrate 61. Therefore, no connecting member needs to be separately disposed between the connection section 621 and the substrate 61, so that difficulty in a connection process between the connection section 621 and the substrate 61 is low. In addition, after the connection section 621 is bonded to the substrate 61, position stability of the connection section 621 is good, and deviation is not likely to occur between the connection section 621 and the substrate 61. In some examples, after optical fiber distribution is completed, adhesive is sprayed to bond the connection section 621 and the substrate 61, to fasten the first optical fiber 62.

In some possible implementations, the substrate 61 is a flexible structure, so that the substrate 61 can be appropriately bent to change a shape, and has good thermal expansion and cold contraction performance, reducing a possibility that the first optical fiber 62 is broken because the substrate 61 generates excessively large stress on the first optical fiber 62 due to thermal expansion and cold contraction.

In some possible implementations, because a position of the bent tail section 622 of the first optical fiber 62 may correspond to a position of an optical connector on a service board 30, in an embodiment in which there are a plurality of first optical fibers 62, lengths by which bent tail sections 622 of the first optical fibers 62 extend beyond a surface of the substrate 61 may remain consistent, and no optical fiber coiling or optical fiber winding is required.

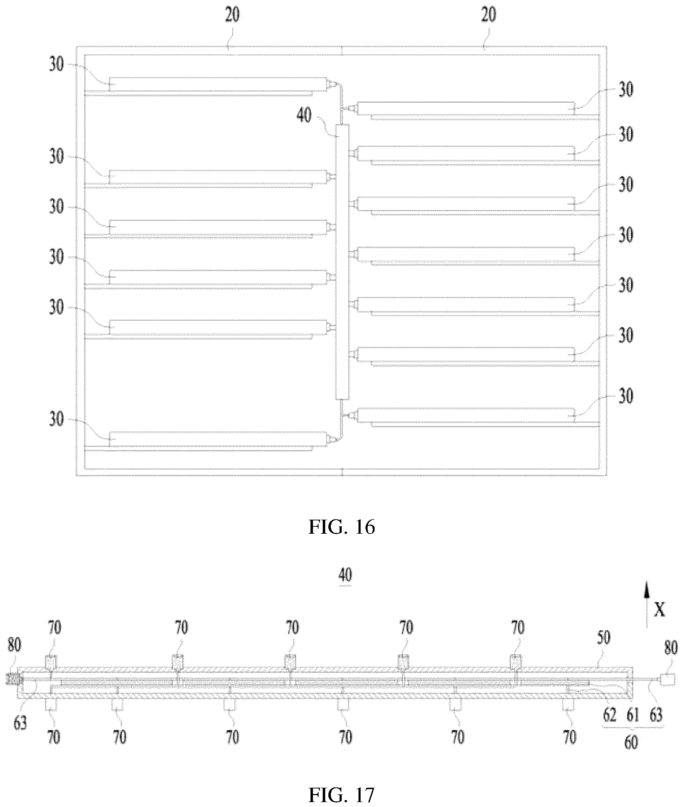

In some possible implementations, FIG. 16 schematically shows a partial structure of a communication device 10 according to an embodiment of this application. FIG. 17 schematically shows a partial sectional structure of an optical backplane component 40 according to an embodiment of this application. Refer to FIG. 16 and FIG. 17. An optical backplane 60 further includes a second optical fiber 63. The second optical fiber 63 is connected to a substrate 61. The second optical fiber 63 is connected to a surface of the substrate 61 in a thickness direction X. Two ends of the second optical fiber 63 respectively extend from two different positions at an edge of the substrate 61 in a direction perpendicular to the thickness direction X, so that the optical fiber extends from the edge of the substrate 61. For example, the substrate 61 may be a rectangle. The second optical fiber 63 extends from two opposite edges respectively in a width direction or a length direction of the substrate 61. Alternatively, one end of the second optical fiber 63 extends from one edge in the width direction of the substrate 61, and the other end extends from one edge in the length direction of the substrate 61. A first optical fiber 62 and the second optical fiber 63 respectively allow the optical fibers extend from a surface and the edge of the substrate 61, improving connection flexibility of the optical backplane 60.

In some possible implementations, the second optical fiber 63 is disposed on each of two opposite surfaces of the substrate 61 in the thickness direction X. This helps improve optical fiber distribution density on the substrate 61.

In some possible implementations, a connection section 621 of the second optical fiber 63 is bonded to the substrate 61. Therefore, no connecting member needs to be separately disposed between the second optical fiber 63 and the substrate 61, so that difficulty in a connection process between the second optical fiber 63 and the substrate 61 is low. In addition, after the second optical fiber 63 is bonded to the substrate 61, position stability of the second optical fiber 63 is good, and deviation is not likely to occur between the second optical fiber 63 and the substrate 61. In some examples, after optical fiber distribution is completed, adhesive is sprayed to bond the second optical fiber 63 and the substrate 61, to fasten the second optical fiber 63.

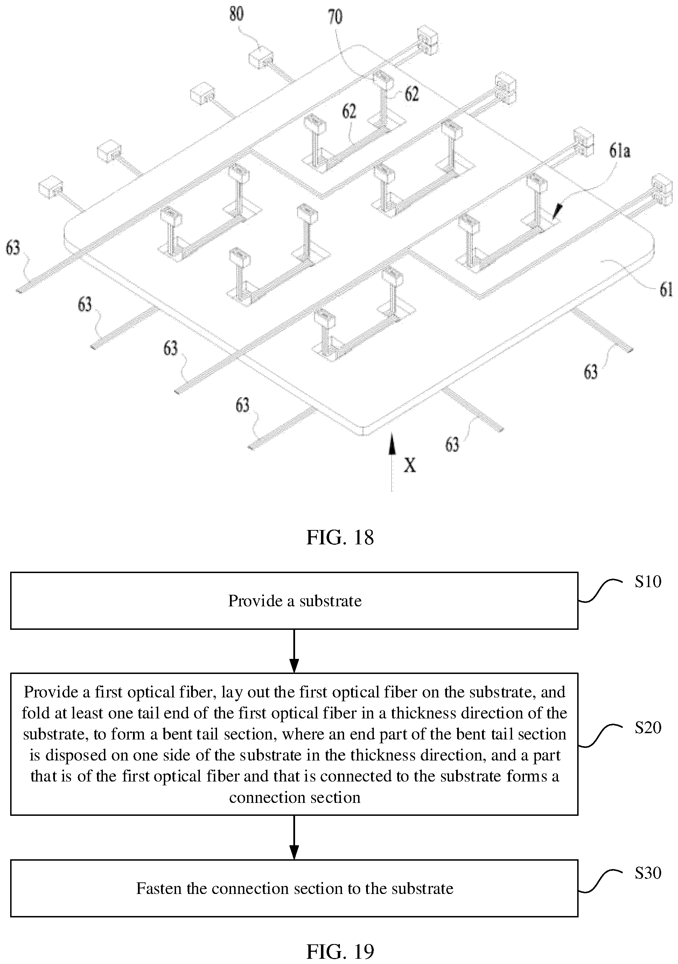

In some possible implementations, FIG. 18 schematically shows a partial structure of an optical backplane component 40 according to an embodiment of this application. Refer to FIG. 17 and FIG. 18. The optical backplane component 40 further includes a second optical connector 80. The second optical connector 80 is configured to connect to a corresponding optical connector on a service board 30, to form an optical path. An end part of the second optical fiber 63 may be connected to the second optical connector 80. The second optical connector 80 may be disposed in a housing 50. A position of the end part of the second optical fiber 63 corresponds to a position of the second optical connector 80. Alternatively, the second optical connector 80 may be located outside the housing 50, so that a length of a tail section of the second optical fiber 63 may be adjusted by winding or coiling the second optical fiber 63, to adjust the position of the second optical connector 80.

For example, the second optical connector 80 may include an MT (Mechanical Transfer) optical fiber connector or a multi-core multi-channel plug-in MPO (Multi-fiber Push On) optical fiber connector.

FIG. 19 is a schematic flowchart of a manufacturing method of an optical backplane 60 according to an embodiment of this application. Refer to FIG. 19. This embodiment of this application further provides the manufacturing method of an optical backplane 60, which is used to process and manufacture the optical backplane 60. The manufacturing method includes the following steps:
Step S10: Provide a substrate 61.
Step S20: Provide a first optical fiber 62, distribute the first optical fiber 62 on the substrate 61, fold at least one tail end of the first optical fiber 62 in a thickness direction X of the substrate 61, to form a bent tail section 622, where an end part of the bent tail section 622 is disposed on one side of the substrate 61 in the thickness direction X, and a part that is of the first optical fiber 62 and that is connected to the substrate 61 forms a connection section 621.
Step S30: Fasten the connection section 621 to the substrate 61.

In some possible implementations, the first optical fiber 62 is distributed on the substrate 61 by using an optical fiber distribution apparatus. In some examples, the optical fiber distribution apparatus includes an optical fiber distribution wheel, and the first optical fiber 62 is distributed on the substrate 61 by using the optical fiber distribution wheel.

In some possible implementations, in the step of fastening the connection section 621 to the substrate 61, the connection section 621 and the substrate 61 are bonded by spraying adhesive.

In some possible implementations, after the step of providing the substrate 61, an opening 61a is processed in the substrate 61, the opening 61a is through the substrate 61 in the thickness direction X, and at least one bent tail section 622 of the first optical fiber 62 penetrates through the opening 61a.

In some examples, an avoidance hole is provided in a workbench that supports the substrate 61. A position of the avoidance hole corresponds to a position of the opening 61a in the thickness direction X of the substrate 61. The bent tail section 622 is inserted into the opening 61a, and the bent tail section 622 is clamped and pulled by using a clamping jaw under the workbench, so that the bent tail section 622 penetrates through the opening 61a.

In some examples, after the step of providing the substrate 61, the position of the opening 61a in the substrate 61 is designed based on a position of an optical connector on a service board 30, so that a position of the bent tail section 622 that penetrates through the opening 61a corresponds to the position of the optical connector on the service board 30.

In some possible implementations, no opening 61a is provided in the substrate 61. The first optical fiber 62 is distributed on the substrate 61. A tail end of the first optical fiber 62 is pulled up and fastened, to form the bent tail section 622 in the thickness direction X of the substrate 61.

In some possible implementations, after the step of fastening the connection section 621 to the substrate 61, fixed-length processing may be performed on the bent tail section 622 of the first optical fiber 62, so that lengths by which bent tail sections 622 of the first optical fibers 62 extend beyond a surface of the substrate 61 remains consistent, reducing processing and manufacturing difficulty and production control difficulty of the optical backplane 60.

In some possible implementations, after the step of fastening the connection section 621 to the substrate 61, a second optical fiber 63 is provided, the second optical fiber 63 is distributed on the substrate 61, and two ends of the second optical fiber 63 respectively extend from two different positions at an edge of the substrate 61 in a direction perpendicular to the thickness direction X.

In some possible implementations, the second optical fiber 63 is distributed on the substrate 61 by using the optical fiber distribution apparatus. In some examples, the optical fiber distribution apparatus includes the optical fiber distribution wheel, and the second optical fiber 63 is distributed on the substrate 61 by using the optical fiber distribution wheel.

In some possible implementations, the distributed second optical fiber 63 is connected to the substrate 61. In some examples, the second optical fiber 63 and the substrate 61 are bonded by spraying adhesive.

In some possible implementations, after a first optical fiber 62 is distributed on one surface of the substrate 61, the substrate 61 is turned over, and the first optical fiber 62 is distributed on the other surface of the substrate 61, so that the optical fiber extends from two surfaces of the formed substrate 61.

In some possible implementations, after a first optical fiber 62 is distributed on one surface of the substrate 61, the substrate 61 is turned over, and the first optical fiber 62 and a second optical fiber 63 are distributed on the other surface of the substrate 61, so that the optical fibers extend from two surfaces and an edge of the formed substrate 61.

In some possible implementations, after a first optical fiber 62 and a second optical fiber 63 are distributed on one surface of the substrate 61, the substrate 61 is turned over, and the first optical fiber 62 and the second optical fiber 63 are distributed on the other surface of the substrate 61, so that the optical fibers extend from two surfaces and an edge of the formed substrate 61.

In the description of embodiments of this application, it should be noted that, unless otherwise explicitly stipulated and restricted, terms "installation", "joint connection", and "connection" should be understood broadly, which, for example, may be a fixed connection, or may be an indirect connection by using a medium, or may be an internal communication between two components, or may be an interactive relationship between two components. For persons of ordinary skill in the art, specific meanings of the foregoing terms in embodiments of this application may be understood based on a specific situation.

In embodiments of this application, it is implied that an apparatus or element in question needs to have a particular orientation, or needs to be constructed and operated in a particular orientation, and therefore cannot be construed as a limitation on embodiments of this application. In the descriptions of embodiments of this application, unless otherwise exactly and specifically ruled, "a plurality of" means two or more.

In the specification, claims, and accompanying drawings of embodiments of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein.

In addition, the terms "include" and "have" and any other variants are intended to housing the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. An optical backplane, comprising:
a substrate, and
a first optical fiber, comprising a connection section and a bent tail section, wherein the connection section is disposed on one side of the substrate in a thickness direction of the substrate, the substrate is connected to the connection section, the bent tail section is folded relative to the connection section in the thickness direction, and an end part of at least one bent tail section is disposed on one side of the substrate in the thickness direction.

2. The optical backplane according to claim 1, wherein there are a plurality of first optical fibers, and bent tail sections of all the first optical fibers are disposed on one side of the substrate; or bent tail sections of some of the first optical fibers are disposed on one side of the substrate, and bent tail sections of the others of the first optical fibers are disposed on the other side of the substrate.

3. The optical backplane according to claim 1 or 2, wherein the substrate comprises an opening, the opening is through the substrate in the thickness direction, and the bent tail section of at least one of the first optical fibers penetrates through the opening.

4. The optical backplane according to claim 3, wherein the at least one of the first optical fibers comprises the two bent tail sections, and the two bent tail sections respectively penetrate through the two openings; or one bent tail section penetrates through the opening, and the other bent tail section and the connection section are located on a same side of the substrate.

5. The optical backplane according to claim 1 or 2, wherein the bent tail section and the connection section of at least one of the first optical fibers are located on a same side of the substrate.

6. The optical backplane according to claim 5, wherein the at least one of the first optical fibers comprises the two bent tail sections, and the two bent tail sections and the connection section are all located on a same side of the substrate.

7. The optical backplane according to any one of claims 1 to 6, wherein the connection section is bonded to the substrate.

8. The optical backplane according to any one of claims 1 to 7, wherein the substrate is a flexible structure.

9. The optical backplane according to any one of claims 1 to 8, wherein the optical backplane further comprises a second optical fiber, the second optical fiber is connected to the substrate, the second optical fiber is connected to a surface of the substrate in the thickness direction, and two ends of the second optical fiber respectively extend from two different positions at an edge of the substrate in a direction perpendicular to the thickness direction.

10. The optical backplane according to claim 9, wherein the second optical fiber is disposed on each of two opposite surfaces of the substrate in the thickness direction.

11. An optical backplane component, comprising:
a housing,
an optical backplane, wherein at least a part of the optical backplane is disposed in the housing, and
the optical backplane comprises:
a substrate, and
a first optical fiber, comprising a connection section and a bent tail section, wherein the connection section is disposed on one side of the substrate in a thickness direction of the substrate, the substrate is connected to the connection section, the bent tail section is folded relative to the connection section in the thickness direction, and an end part of at least one bent tail section is disposed on one side of the substrate in the thickness direction; and
a first optical connector, disposed in the housing, wherein the first optical connector is located on one side of the substrate in the thickness direction, and an end part of the bent tail section is connected to the first optical connector.

12. The optical backplane component according to claim 11, wherein the substrate comprises an opening, the opening is through the substrate in the thickness direction, the at least one bent tail section of the first optical fiber penetrates through the opening, and the first optical connector is disposed corresponding to the opening.

13. The optical backplane component according to claim 11 or 12, wherein the optical backplane further comprises a second optical fiber, the second optical fiber is connected to the substrate, the second optical fiber is connected to a surface of the substrate in the thickness direction, two ends of the second optical fiber respectively extend from two different positions at an edge of the substrate in a direction perpendicular to the thickness direction, the optical backplane component further comprises a second optical connector, wherein an end part of the second optical fiber is connected to the second optical connector; and the second optical connector is disposed in the housing, or the second optical connector is located outside the housing.

14. A communication device, comprising:
a service board, and
the optical backplane component according to any one of claims 11 to 13, wherein the first optical connector is inserted into the service board.

15. A manufacturing method of an optical backplane, comprising:
providing a substrate;
providing a first optical fiber, distributing the first optical fiber on the substrate, and folding at least one tail end of the first optical fiber in a thickness direction of the substrate, to form a bent tail section, wherein an end part of the bent tail section is disposed on one side of the substrate in the thickness direction, and a part that is of the first optical fiber and that is connected to the substrate forms a connection section; and
fastening the connection section to the substrate.

16. The manufacturing method according to claim 15, wherein after the step of providing a substrate, an opening is processed in the substrate, the opening is through the substrate in the thickness direction, and at least one bent tail section of the first optical fiber penetrates through the opening.

17. The manufacturing method according to claim 15 or 16, wherein after the step of fastening the connection section to the substrate, a second optical fiber is provided, the second optical fiber is distributed on the substrate, and two ends of the second optical fiber respectively extend from two different positions at an edge of the substrate in a direction perpendicular to the thickness direction.
